# EUROPEAN PATENT SPECIFICATION

(11) **EP 3 839 330 B1**
(45) Date of publication and mention of the grant of the patent: **09.07.2025**
(21) Application number: 19425092.4
(22) Date of filing: 18.12.2019
(51) Int. Cl.: F21S 43/241, F21S 43/251, F21S 43/249, F21S 43/243, F21S 43/245, F21S 43/31, F21S 43/14, F21S 43/15, F21S 43/40, F21S 43/27, F21S 43/37, F21S 41/143, F21S 41/148, F21S 41/151, F21S 41/24, F21S 41/32, F21V 8/00

(54) **AUTOMOTIVE LIGHTING AND/OR SIGNALING DEVICE**
BELEUCHTUNGS- UND/ODER SIGNALVORRICHTUNG FÜR FAHRZEUGE
DISPOSITIF D'ILLUMINATION ET/OU DE SIGNALISATION POUR VÉHICULES AUTOMOBILES

(43) Date of publication of application: 23.06.2021
(73) Proprietor: Marelli Automotive Lighting Italy S.p.A., 10078 Venaria Reale (TO) (IT)
(72) Inventor: Saccà, Alessandro, I-33028 Tolmezzo, Udine (IT); Paroni, Sara, I-33028 Tolmezzo, Udine (IT)
(74) Representative: Mitola, Marco

(56) References cited:
- EP-A1- 2 624 027
- EP-A2- 2 489 550
- DE-A1- 102016 208 640
- JP-A- 2014 157 692
- JP-A- 2017 228 490
- KR-A- 20180 073 069
- US-A1- 2015 277 027
- US-A1- 2018 087 734
- US-A1- 2019 063 710

## Description

### FIELD OF APPLICATION

The present invention relates to an automotive lighting and/or signaling device.

### BACKGROUND ART

The term automotive lighting and/or signaling device is used herein in a very broad sense, so as to comprise both a rear and a front automotive lamp, the latter also being called headlight or headlamp.

Therefore, a position light, a direction indicator light, a stop light, a rear fog light, a reversing light, a dipped-beam headlamp, a high-beam headlamp and the like, are included.

Furthermore, the term is also meant to comprise a map light, a light for a dashboard or part thereof; therefore, the automotive lighting and/or signaling device may be located both inside and outside the vehicle.

As known, said automotive lighting and/or signaling devices may be used both for lighting and for sending visual signals.

To this end, said devices comprise a plurality of illuminating portions having different colors, different levels of brightness (also according to regulations to be complied with) and the like.

In particular, in recent years, lighting and/or signaling devices have increasingly acquired an aesthetic value as well as a photometric function. In other words, apart from, of course, the lighting and/or signaling function which they must carry out, said lighting and/or signaling devices are increasingly used as design elements within the context of the vehicle in which they are inserted.

To this end, providing lighting and/or signaling devices which have main illuminating portions, having the purpose of fulfilling the photometric function of the lamp, and secondary illuminating portions, having the function of creating lighting areas with a purely aesthetic function, is known. For example, the illuminating portions may consist of halos or areas which at least partially surround the main illuminating portions. These solutions may be realized with specific optical systems comprising light guides.

The background art includes several solutions of lighting and/or signaling devices which carry out such technical and aesthetic functions.

Some of said solutions provide for the use of two distinct luminous sources, one for the main illuminating function and the other for the secondary illuminating function. However, such solutions entail some disadvantages due, for example, to the redundancy of luminous sources, to the assembly thereof, to the activation thereof and so on. In a nutshell, such solutions do not entail technical issues in terms of optical performance, but they entail other ones in terms of construction, assembly and consumption costs of the lighting and/or signaling device. Such solution are known, for example, from JP 2014157692 A.

Solutions in which a single luminous source is used to generate both the luminous beam which will supply the main illuminating portion and the luminous beam which will supply the secondary illuminating portion also exist.

Such solutions have the advantage of using a single luminous source and therefore solve the aforementioned issues related to the redundancy of the luminous sources.

On the other hand, these known solutions do not allow the luminous beam generated by the single luminous source to be exploited in an efficient manner; in fact, to power both the main illuminating portion and the secondary illuminating portion, it is necessary to divide the luminous beam into two portions and channel the respective beam portions towards the relative illuminating portions. The optics and/or configurations used to date for such division and channeling of the luminous beams do not allow for high energy efficiency. This means that, given the same power of the luminous source, it is necessary to sacrifice at least partially the quantity of light intended for the secondary illuminating portion, so as to guarantee compliance with the regulations (in terms of minimum luminous flux) on the main illuminating portion. Alternatively, it is necessary to increase the power of the installed luminous source, so as to make up for the 'poor' energy efficiency of the known solutions.

In other words, the known solutions do not allow to allocate the whole area of the main illuminating portion to perform the main illuminating function itself. In fact, in the background art, the main illuminating portion comprises optical elements such as inclined walls or prisms capable of deflecting the light towards the secondary illuminating portion. Such optical elements, disadvantageously, reduce the area intended for the main illuminating portion. The reduction of such area involves the need to install a greater luminous power. Such solutions are known, for example, from EP2489550 A2.

### PRESENTATION OF THE INVENTION

The need is therefore felt in the background art to provide an automotive lighting and/or signaling device which allows to obtain the above mentioned technical effects, in an efficient manner from an energy consumption point of view, using a single luminous source to supply both the main illuminating portion and the secondary illuminating portion.

Such requirement is met by an automotive lighting and/or signaling device in accordance with claim 1.

Other embodiments of the present invention are described in the dependent claims.

### DESCRIPTION OF THE DRAWINGS

Further features and advantages of the present invention will become more apparent from the following description of preferred and non-limitative embodiments thereof, in which:
Figure 1 shows a perspective view, with separate parts, of a lighting and/or signaling device according to an embodiment of the present invention;
Figures 2-3 show perspective views, from different angles, in an assembled configuration, of the lighting and/or signaling device of Figure 1;
Figure 4 shows the enlarged detail IV of Figure 3;
Figure 5 shows a sectional view of the lighting and/or signaling device of Figure 1, along the section plane V-V indicated in Figure 2;
Figure 6 shows a perspective view, with separate parts, of a lighting and/or signaling device according to a further embodiment of the present invention;
Figures 7-8 show perspective views, from different angles, in an assembled configuration and in partial section, of the lighting and/or signaling device of Figure 6;
Figure 9 shows a sectional view of the lighting and/or signaling device of Figure 6, from the side of arrow IX indicated in Figure 8.

The common elements or parts of elements between the embodiments described below will be indicated with the same reference numerals.

### DETAILED DESCRIPTION

With reference to the aforesaid figures, reference numeral 4 generally indicates a lighting and/or signaling device, such as an automotive lamp, to which the following description will refer without this implying any loss of generality.

As mentioned above, the term lighting and/or signaling device indifferently means an automotive rear lamp or an automotive front lamp, the latter also called headlight or headlamp, comprising an external vehicle light having a lighting and/or signaling function, such as, for example, a position light, which may be a front, rear, side position light, a direction indicator light, a stop light, a rear fog light, a high-beam headlamp, a dipped-beam headlamp and the like.

Furthermore, the term lighting and/or signaling device also means an inside map light, a light for a dashboard or part thereof, a display and so on.

Therefore, as better described below, in the signaling function thereof, the device may comprise the possibility of sending luminous signals, logos, but also luminous messages and writings of any kind.

The lighting and/or signaling device 4 comprises a container body or housing 8, usually made of a polymeric material, which conventionally allows the lighting and/or signaling device 4 to be fastened to the relative vehicle or to any type of support.

For the purposes of the present invention, the container body or housing 8 may have any shape and size, as well as positioning: for example, the container body 8 may not be directly associated with the bodywork or other external fixings of the associated vehicle.

As seen, the container body 8 may also be internally associated with the vehicle, for example, on the instrument panel, on the dashboard, on the parcel shelf and so on.

The container body 8 delimits a containment seat 12 which houses a plurality of components of said lighting and/or signaling device.

In particular, the containment seat 12 houses a plurality of luminous sources 16 arranged and supported inside said containment seat 12.

Each luminous source 16 is configured to emit, when powered, a luminous beam comprising a plurality of luminous rays R.

Preferably, said luminous sources 16 are LED luminous sources or laser luminous sources.

For example, a lenticular body 20 may be associated with the container body 8, as one at least partial closure, so as to close said containment seat 12 which houses the at least one luminous source 16.

For the purposes of the present invention, the lenticular body 20 may be external to the lighting and/or signaling device 4, so as to define at least one external wall of the lighting and/or signaling device directly subject to the atmosphere.

The lenticular body 20 closes the containment seat 12 and is adapted to be crossed by the luminous beam produced by the luminous sources 16, which is transmitted outside the containment seat 12.

In this regard, the lenticular body 20 is made of an at least partially transparent or semitransparent or translucent material, which may also include one or more opaque portions, so as to allow, in any case, the at least partial crossing of the luminous beam produced by the luminous source.

According to possible embodiments, the material of the lenticular body 20 is a resin such as PMMA, PC and the like.

The lighting and/or signaling device 4 comprises a light guide 24 adapted to receive and transmit the luminous beam received by said luminous source 16.

More in detail, the light guide 24 comprises a main section 28, configured to emit a main light beam P of the luminous beam, by means of a main illuminating portion 32, and a secondary section 36, configured to emit a secondary light beam S of the luminous beam, by means of a secondary illuminating portion 40.

In other words, the luminous beam emitted by the luminous source 16 splits, as better described below, into the main luminous beam P, intended to be emitted outside of the lighting and/or signaling device 4, by the main illuminating portion 32 to which it is transmitted by the main section 28, and splits into the secondary luminous section S, intended to be emitted outside of the lighting and/or signaling device 4, by the secondary illuminating portion 40 to which it is transmitted from the secondary section 36.

Said main and secondary sections 28, 36 are seamless; they are conventionally in one piece with each other.

Advantageously, a distribution element 44 is interposed between the light guide 24 and the luminous source 16, upstream of the light guide 24, configured to divide the luminous beam into said main luminous beam P, inserted into the main section 28 by means of a main interface 48, and into said secondary luminous beam S, inserted into the secondary section 36 by means of a secondary interface 52. Such distribution element 44 is provided with a light inlet surface 45 facing the luminous source 16.

At said main interface 48, a main reflector 56 is provided which divides the main luminous beam P from the secondary luminous beam S.

Furthermore, at said secondary interface 52, a secondary reflector 60 is provided which deflects the secondary luminous beam S in the secondary section 36.

The main reflector 56 and/or the secondary reflector 60 may be made in various ways; for example, they comprise a prism and/or an inclined wall capable of deflecting light according to the total internal reflection and/or a mirror or white treated surface.

Preferably, the luminous source 16 is positioned on the opposite side of a junction area 64 between the main section 28 and the secondary section 36.

The luminous source 16 is arranged on the side of, or at, said main section 28 of the light guide 24.

Preferably, the luminous source 16 is arranged at said main interface 48.

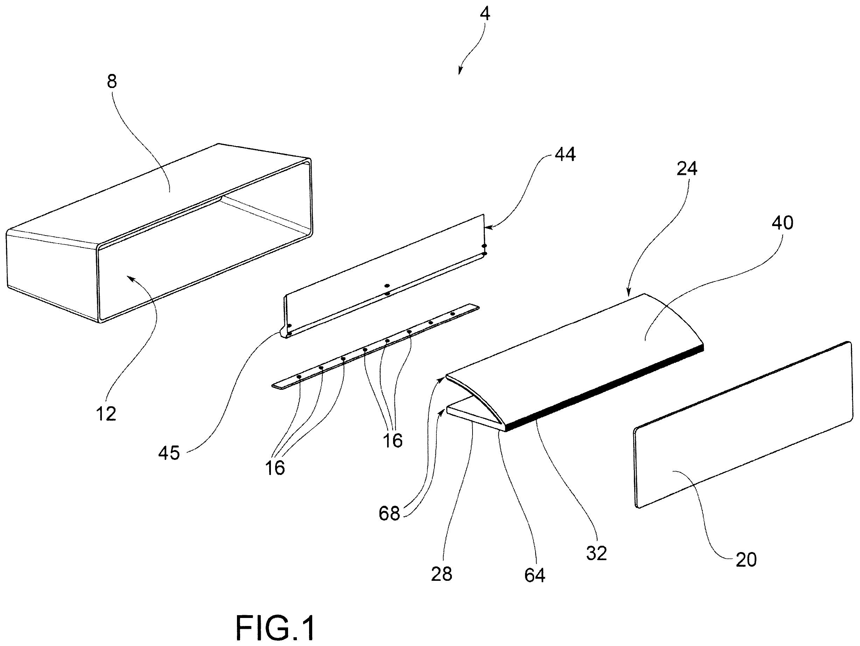

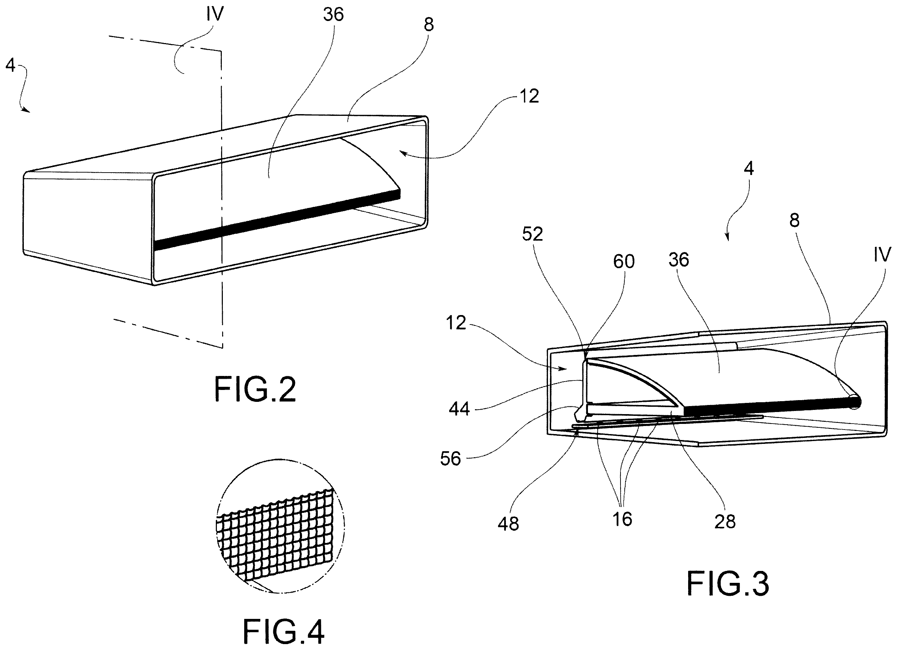

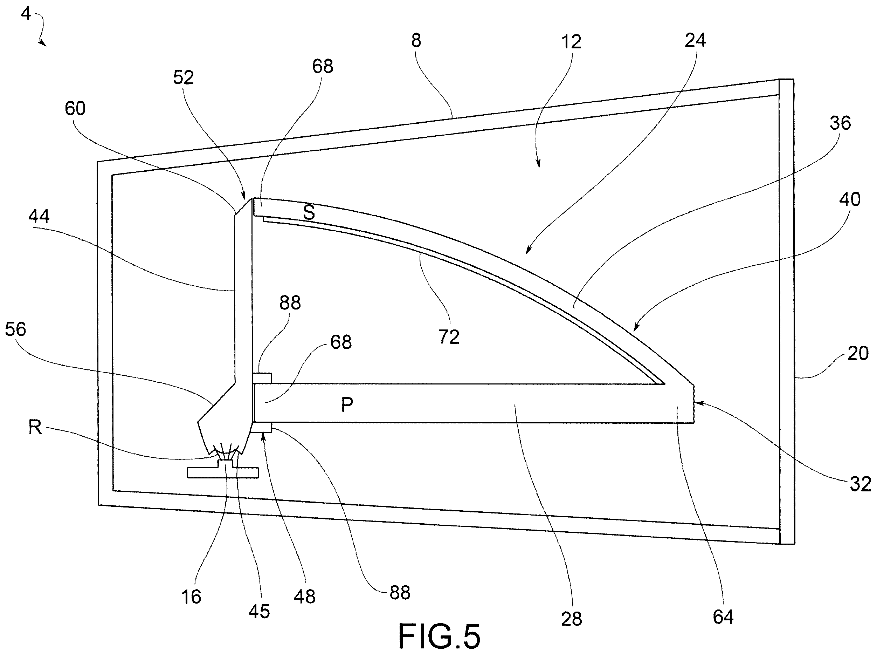

According to a possible embodiment (Figures 1-5) the main reflector 56 is configured to deflect said main luminous flux P towards the main section 28 of the light guide 24.

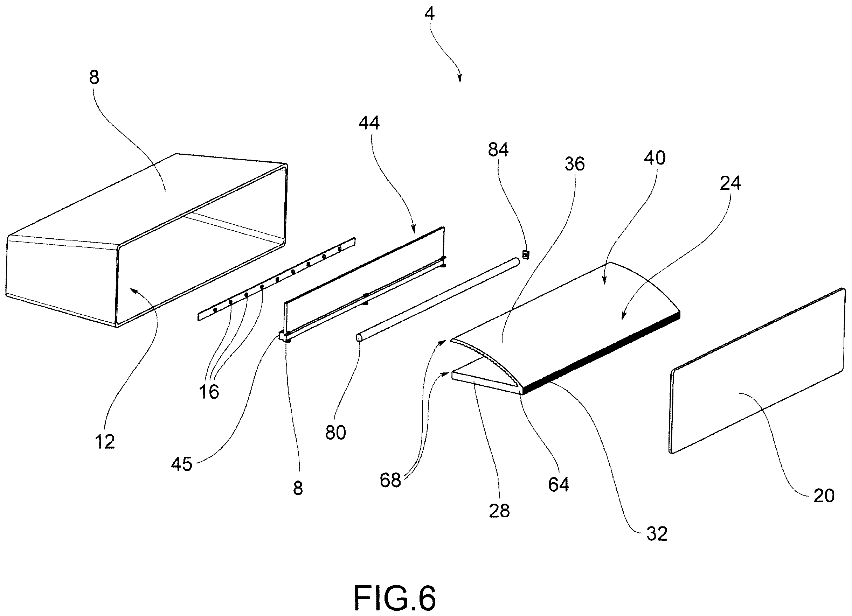

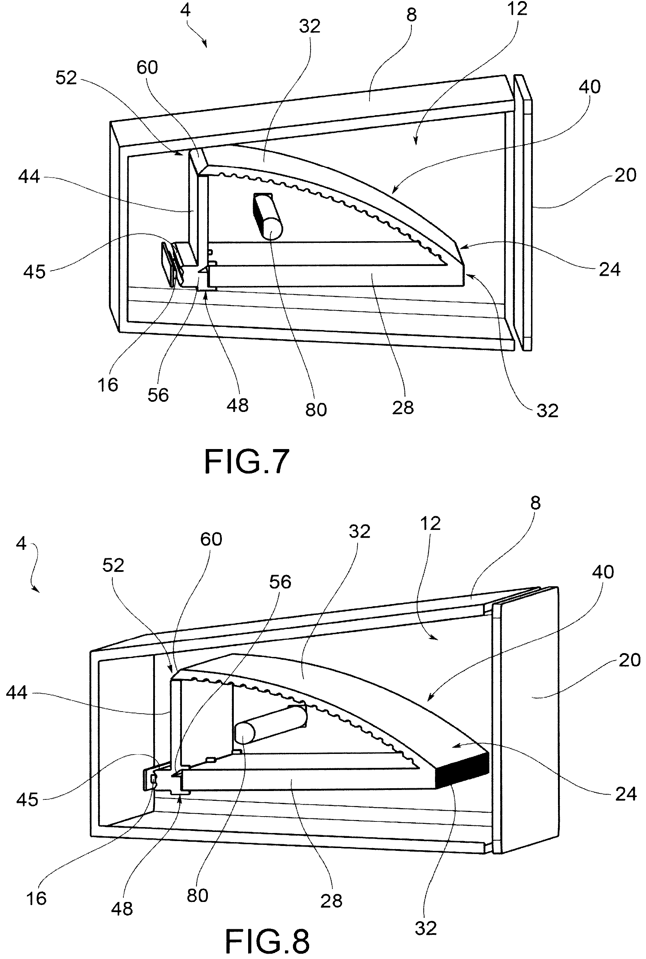

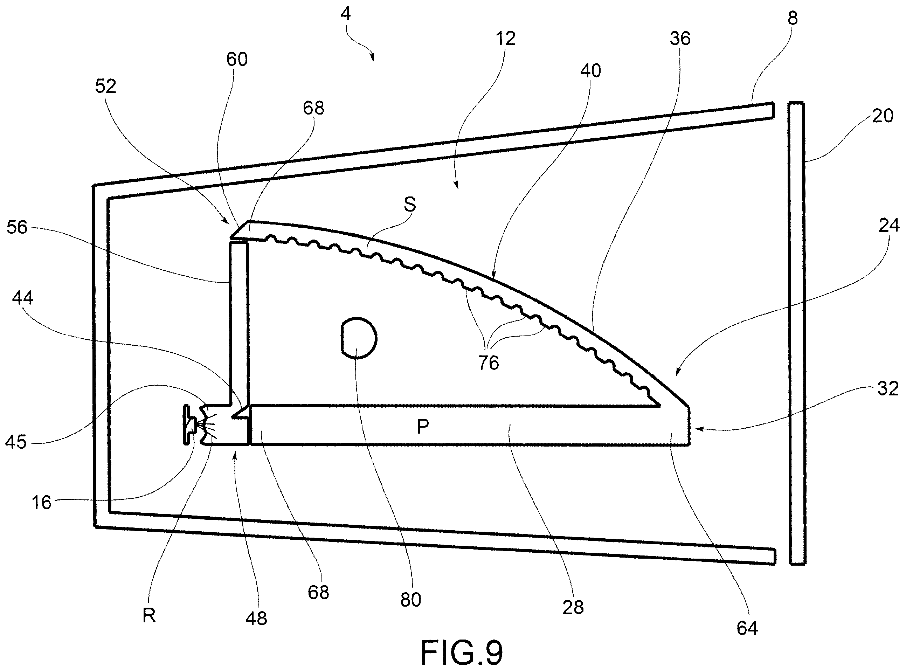

According to a further embodiment (Figures 6-9), the main reflector 56 is configured to deflect said secondary luminous flux S towards the secondary interface 52.

The light guide 24 may have several geometric configurations.

The light guide 24 has an overall 'V' configuration, in which the main section 28 and the secondary section 36 join at a vertex of said 'V', at said junction area 64.

The distribution element 44 extends between free ends 68 of the main section 28 and of the secondary section 36, opposite to the vertex.

According to a possible embodiment, the secondary section 36, on the opposite side of the lenticular body 20, comprises a reflector screen 72 (Figures 1-5). For example, said reflector screen 72 may be made by means of a coating of metallic material, a white or lacquered coating or the like.

According to a possible embodiment (Figures 6-9), the secondary section 36, on the opposite side of the lenticular body 20, comprises a plurality of extracting elements 76 of the secondary luminous beam towards the lenticular body 20.

For example, said extracting elements 76 comprise a knurled wall or prisms or dotted elements.

It is also possible to provide that the lighting and/or signaling device 4 comprises an internal light guide 80 arranged in a space delimited between said main 28 and secondary sections 36 and facing said extracting elements 76, in which the internal light guide is in turn provided with a luminous source 84 thereof.

According to a possible embodiment, the distribution element 44 is mechanically fastened to the light guide 24 by means of fastening means 88, preferably according to a shape coupling.

The operation of a lighting and/or signaling device according to the present invention will now be described.

In particular, by turning on the luminous source, the emission of a luminous beam is generated, which enters into the light guide through the distribution element 44.

In particular, in the embodiment of Figures 1-5, the luminous rays which hit the main reflector 56 are reflected by the latter towards the main section 28. Such reflected luminous rays form the main luminous beam P which propagates by reflection inside the main section 28 until it is extracted through the main illuminating portion 32.

The luminous rays which do not hit the main reflector 56 propagate directly in the distribution element 44, forming the secondary luminous beam S, until they reach the secondary reflector S. When said luminous rays hit the secondary reflector 60, they are directed by the latter into the secondary section 36, forming the secondary luminous beam S.

The secondary luminous beam S propagates by reflection inside the secondary section 36 and is directed or extracted, through the secondary illuminating portion 40, towards the lenticular body 20 by virtue of the presence of the reflector screen 72 and/or of the extracting elements 76.

In the embodiment of Figures 6-9, the luminous rays produced by the luminous source are partially directly directed by the distribution element 44 into the main section 28. Such rays form the main luminous beam P which is extracted through the main illuminating portion 32.

Another part of the luminous rays produced by the luminous source 16 hits the main reflector 56 which reflects them towards the secondary reflector 60. When said luminous rays hit the secondary reflector 60, they are directed by the latter into the secondary section 36, forming the secondary luminous beam S.

As seen, the secondary luminous beam S propagates by reflection inside the secondary section 36 and is directed or extracted, through the secondary illuminating portion 40, towards the lenticular body 20 by virtue of the presence of the reflector screen 72 and/or of the extracting elements 76.

As it may be appreciated from the foregoing, the present invention allows to overcome the drawbacks presented in the background art.

In particular, the automotive lighting and/or signaling device in accordance with the present invention allows to obtain the lighting of both the main illuminating portion as well as the secondary illuminating portion in an efficient manner from the energy consumption point of view, while using a single luminous source.

The redundancy of the luminous sources, as it occurs in the known solutions, is therefore avoided, together with the relative disadvantages inherent in the costs of construction and assembly, as well as the relative energy consumption.

Furthermore, by virtue of the specific shape of the distribution element, the luminous beam is divided upstream, i.e., before entering the light guide, into the main luminous beam and the secondary luminous beam: thereby the distribution of the luminous beam is optimized. In particular, priority is given to the emission of the main luminous beam, which carries out the photometric function, and the remaining secondary luminous beam may be advantageously channeled into the secondary section, by virtue of the secondary reflector.

By virtue of the fact that the division of the luminous beams occurs upstream of the luminous guide, it is possible to optimize the optical performance of the lighting and/or signaling device. In fact, the area of the main illuminating portion is not reduced.

In order to meet contingent and specific needs, several changes and variations to the lighting and/or signaling devices described above may be introduced by those skilled in the art without departing from the scope of the invention as defined by the following claims.

## Claims

1. A lighting and/or signaling device (4) for a vehicle, in particular for the automotive sector, comprising:
- a container body (8) which delimits a containment seat (12) closed by a lenticular body (20),
- at least one luminous source (16) arranged and supported inside said containment seat (12), configured to emit, when powered, a luminous beam comprising a plurality of luminous rays (R),
- a light guide (24) adapted to receive and transmit the luminous beam received by said luminous source (16),
- the light guide (24) comprises a main section (28), configured to emit a main light beam (P) of the luminous beam, by means of a main illuminating portion (32), and a secondary section (36), configured to emit a secondary light beam (S) of the luminous beam, by means of a secondary illuminating portion (40),
wherein
- a distribution element (44) is interposed between the light guide (24) and the luminous source (16), upstream of the light guide (24), configured to divide the luminous beam into said main luminous beam (P), inserted into the main section (28) by means of a main interface (48), and into said secondary luminous beam (S), inserted into the secondary section (36) by means of a secondary interface (52),
- wherein, at said main interface (48), a main reflector (56) is provided, which divides the main luminous beam (P) from the secondary luminous beam (S), and
- wherein, at said secondary interface (52), a secondary reflector (60) is provided, which deflects the secondary luminous beam (S) in the secondary section (36),
**characterized in that**
the light guide (24) has an overall 'V' configuration, said main section (28) and secondary section (36) joining at a vertex of said 'V', wherein the distribution element (44) extends between free ends (68) of the main section (28) and of the secondary section (36), opposite to the vertex.

2. A lighting and/or signaling device (4) according to claim 1, wherein the luminous source (16) is positioned on the opposite side of a junction area (64) between the main section (28) and the secondary section (36).

3. A lighting and/or signaling device (4) according to claim 1 or 2, wherein the luminous source (16) is arranged on the side of said main section (28) of the light guide (24).

4. A lighting and/or signaling device (4) according to claim 1, 2 or 3, wherein the luminous source (16) is arranged at said main interface (48).

5. A lighting and/or signaling device (4) according to any one of claims 1 to 4, wherein the main reflector (56) is configured to deflect said main luminous flux (P) towards the main section (28).

6. A lighting and/or signaling device (4) according to any one of claims 1 to 4, wherein the main reflector (56) is configured to deflect said secondary luminous flux (S) towards the secondary interface (52).

7. A lighting and/or signaling device (4) according to any one of the preceding claims, wherein the secondary section (36), on the opposite side of the lenticular body (20), comprises a reflector screen (72).

8. A lighting and/or signaling device (4) according to any one of the preceding claims, wherein the secondary section (36), on the opposite side of the lenticular body (20), comprises a plurality of extracting elements (76) of the secondary luminous beam (S) towards the lenticular body (20).

9. A lighting and/or signaling device (4) according to claim 8, wherein said extracting elements (76) comprise a knurled wall, and/or prisms and/or dotted elements.

10. A lighting and/or signaling device (4) according to claim 8 or 9, wherein the device (4) comprises an internal light guide (80) arranged in a space delimited between said main and secondary sections (28, 36) and facing said extracting elements (76), the internal light guide (80) being in turn provided with an internal luminous source (84) thereof.

11. A lighting and/or signaling device (4) according to any one of the preceding claims, wherein said luminous source (16) is an LED luminous source or a laser source.

12. A lighting and/or signaling device (4) according to any one of the preceding claims, wherein the main reflector (56) and/or the secondary reflector (60) comprise a prism and/or an inclined wall capable of deflecting light according to the total internal reflection and/or a mirror or white treated surface.

13. A lighting and/or signaling device (4) according to any one of the preceding claims, wherein the distribution element (44) is mechanically fastened to the light guide (24) by means of fastening means (88).

14. A lighting and/or signaling device (4) according to claim 13, wherein said fastening means (88) comprise a shape coupling.

15. A lighting and/or signaling device (4) according to any one of the preceding claims, wherein said main and secondary sections (28, 32) are seamless.

## Patentansprüche

1. Beleuchtungs- und/oder Signalisierungsvorrichtung (4) für ein Fahrzeug, insbesondere für den Automobilbereich, umfassend:
- einen Behälterkörper (8), der einen Aufnahmesitz (12) begrenzt, der durch einen linsenförmigen Körper (20) verschlossen ist,
- mindestens eine Lichtquelle (16), die im Inneren des Aufnahmesitzes (12) angeordnet ist und gehalten wird und die so konfiguriert ist, dass sie bei eingeschalteter Stromversorgung einen Lichtstrahl aussendet, der eine Vielzahl von Lichtstrahlen (R) umfasst,
- einen Lichtleiter (24), der dazu angepasst ist, den von der Lichtquelle (16) empfangenen Lichtstrahl zu empfangen und weiterzuleiten,
- der Lichtleiter (24) einen Hauptabschnitt (28) umfasst, der konfiguriert ist, um mittels eines Hauptbeleuchtungsabschnitts (32) ein Hauptlichtbündel (P) des Lichtbündels auszusenden, und einen sekundären Abschnitt (36), der konfiguriert ist, um mittels eines sekundären Beleuchtungsabschnitts (40) ein sekundäres Lichtbündel (S) des Lichtbündels auszusenden,
wobei
- ein Verteilungselement (44) zwischen dem Lichtleiter (24) und der Lichtquelle (16) stromaufwärts des Lichtleiters (24) angeordnet ist, das konfiguriert ist, um das Lichtbündel in das Hauptlichtbündel (P), das mittels einer Hauptschnittstelle (48) in den Hauptabschnitt (28) eingeführt wird, und in das sekundäre Lichtbündel (S), das mittels einer sekundären Schnittstelle (52) in den sekundären Abschnitt (36) eingeführt wird, aufzuteilen,
- wobei an der Hauptschnittstelle (48) ein Hauptreflektor (56) bereitgestellt ist, der den Hauptlichtstrahl (P) vom sekundären Lichtstrahl (S) trennt, und
- wobei an der sekundären Schnittstelle (52) ein sekundärer Reflektor (60) bereitgestellt ist, der den sekundären Lichtstrahl (S) in den sekundären Abschnitt (36) umlenkt,
**dadurch gekennzeichnet, dass**
der Lichtleiter (24) insgesamt eine "V"-förmige Konfiguration aufweist, wobei sich der Hauptabschnitt (28) und der sekundäre Abschnitt (36) an einem Scheitelpunkt des "V" treffen, wobei sich das Verteilungselement (44) zwischen den freien Enden (68) des Hauptabschnitts (28) und des sekundären Abschnitts (36) gegenüber dem Scheitelpunkt erstreckt.

2. Beleuchtungs- und/oder Signalvorrichtung (4) nach Anspruch 1, wobei die Lichtquelle (16) auf der gegenüberliegenden Seite eines Verbindungsbereichs (64) zwischen dem Hauptabschnitt (28) und dem sekundären Abschnitt (36) positioniert ist.

3. Beleuchtungs- und/oder Signalvorrichtung (4) nach Anspruch 1 oder 2, wobei die Lichtquelle (16) auf der Seite des Hauptabschnitts (28) des Lichtleiters (24) angeordnet ist.

4. Beleuchtungs- und/oder Signalvorrichtung (4) nach Anspruch 1, 2 oder 3, wobei die Lichtquelle (16) an der Hauptschnittstelle (48) angeordnet ist.

5. Beleuchtungs- und/oder Signalvorrichtung (4) nach einem der Ansprüche 1 bis 4, wobei der Hauptreflektor (56) konfiguriert ist, um den Hauptlichtstrom (P) in Richtung des Hauptabschnitts (28) umzulenken.

6. Beleuchtungs- und/oder Signalvorrichtung (4) nach einem der Ansprüche 1 bis 4, wobei der Hauptreflektor (56) konfiguriert ist, um den sekundären Lichtstrom (S) in Richtung der sekundären Schnittstelle (52) abzulenken.

7. Beleuchtungs- und/oder Signalvorrichtung (4) nach einem der vorstehenden Ansprüche, wobei der sekundäre Abschnitt (36) auf der gegenüberliegenden Seite des linsenförmigen Körpers (20) einen Reflektorschirm (72) umfasst.

8. Beleuchtungs- und/oder Signalvorrichtung (4) nach einem der vorstehenden Ansprüche, wobei der sekundäre Abschnitt (36) auf der gegenüberliegenden Seite des linsenförmigen Körpers (20) eine Vielzahl von Extraktionselementen (76) des sekundären Lichtstrahls (S) in Richtung des linsenförmigen Körpers (20) umfasst.

9. Beleuchtungs- und/oder Signalvorrichtung (4) nach Anspruch 8, wobei die Extraktionselemente (76) eine geriffelte Wand und/oder Prismen und/oder gepunktete Elemente umfassen.

10. Beleuchtungs- und/oder Signalvorrichtung (4) nach Anspruch 8 oder 9, wobei die Vorrichtung (4) einen internen Lichtleiter (80) umfasst, der in einem zwischen den Haupt- und sekundären Abschnitten (28, 36) begrenzten Raum angeordnet ist und den Extraktionselementen (76) gegenüberliegt, wobei der interne Lichtleiter (80) wiederum mit einer internen Lichtquelle (84) versehen ist.

11. Beleuchtungs- und/oder Signalvorrichtung (4) nach einem der vorstehenden Ansprüche, wobei die Lichtquelle (16) eine LED-Lichtquelle oder eine Laserquelle ist.

12. Beleuchtungs- und/oder Signalvorrichtung (4) nach einem der vorstehenden Ansprüche, wobei der Hauptreflektor (56) und/oder der sekundäre Reflektor (60) ein Prisma und/oder eine geneigte Wand, die in der Lage ist, Licht entsprechend der Totalreflexion abzulenken, und/oder einen Spiegel oder eine weiß behandelte Oberfläche umfassen.

13. Beleuchtungs- und/oder Signalvorrichtung (4) nach einem der vorstehenden Ansprüche, wobei das Verteilungselement (44) mittels Befestigungsmitteln (88) mechanisch an dem Lichtleiter (24) befestigt ist.

14. Beleuchtungs- und/oder Signalvorrichtung (4) nach Anspruch 13, wobei die Befestigungsmittel (88) eine Formkupplung umfassen.

15. Beleuchtungs- und/oder Signalvorrichtung (4) nach einem der vorstehenden Ansprüche, wobei die Haupt- und sekundären Abschnitte (28, 32) nahtlos sind.

## Revendications

1. Dispositif d'éclairage et/ou de signalisation (4) pour un véhicule, en particulier pour le secteur automobile, comprenant :
- un corps de récipient (8) qui délimite un siège de confinement (12) fermé par un corps lenticulaire (20),
- au moins une source lumineuse (16) disposée et supportée à l'intérieur dudit siège de confinement (12), configurée pour émettre, lorsqu'elle est alimentée, un faisceau lumineux comprenant une pluralité de rayons lumineux (R),
- un guide de lumière (24) adapté pour recevoir et transmettre le faisceau lumineux reçu par ladite source lumineuse (16),
- le guide de lumière (24) comprend une section principale (28), configurée pour émettre un faisceau de lumière principal (P) du faisceau lumineux, au moyen d'une partie d'éclairage principale (32), et une section secondaire (36), configurée pour émettre un faisceau de lumière secondaire (S) du faisceau lumineux, au moyen d'une partie d'éclairage secondaire (40),
dans lequel
- un élément de distribution (44) est interposé entre le guide de lumière (24) et la source lumineuse (16), en amont du guide de lumière (24), configuré pour diviser le faisceau lumineux en ledit faisceau lumineux principal (P), inséré dans la section principale (28) au moyen d'une interface principale (48), et en ledit faisceau lumineux secondaire (S), inséré dans la section secondaire (36) au moyen d'une interface secondaire (52),
- dans lequel, au niveau de ladite interface principale (48), un réflecteur principal (56) est prévu, qui sépare le faisceau lumineux principal (P) du faisceau lumineux secondaire (S), et
- dans lequel, au niveau de ladite interface secondaire (52), un réflecteur secondaire (60) est prévu, qui dévie le faisceau lumineux secondaire (S) dans la section secondaire (36),
**caractérisé en ce que**
le guide de lumière (24) a une configuration globale en « V », ladite section principale (28) et ladite section secondaire (36) se rejoignant au niveau d'un sommet dudit « V », dans lequel l'élément de distribution (44) s'étend entre des extrémités libres (68) de la section principale (28) et de la section secondaire (36), à l'opposé du sommet.

2. Dispositif d'éclairage et/ou de signalisation (4) selon la revendication 1, dans lequel la source lumineuse (16) est positionnée sur le côté opposé d'une zone de jonction (64) entre la section principale (28) et la section secondaire (36).

3. Dispositif d'éclairage et/ou de signalisation (4) selon la revendication 1 ou 2, dans lequel la source lumineuse (16) est disposée sur le côté de ladite section principale (28) du guide de lumière (24).

4. Dispositif d'éclairage et/ou de signalisation (4) selon la revendication 1, 2 ou 3, dans lequel la source lumineuse (16) est disposée au niveau de ladite interface principale (48).

5. Dispositif d'éclairage et/ou de signalisation (4) selon l'une quelconque des revendications 1 à 4, dans lequel le réflecteur principal (56) est configuré pour dévier ledit flux lumineux principal (P) vers la section principale (28).

6. Dispositif d'éclairage et/ou de signalisation (4) selon l'une quelconque des revendications 1 à 4, dans lequel le réflecteur principal (56) est configuré pour dévier ledit flux lumineux secondaire (S) vers l'interface secondaire (52).

7. Dispositif d'éclairage et/ou de signalisation (4) selon l'une quelconque des revendications précédentes, dans lequel la section secondaire (36), sur le côté opposé au corps lenticulaire (20), comprend un écran réflecteur (72).

8. Dispositif d'éclairage et/ou de signalisation (4) selon l'une quelconque des revendications précédentes, dans lequel la section secondaire (36), sur le côté opposé au corps lenticulaire (20), comprend une pluralité d'éléments d'extraction (76) du faisceau lumineux secondaire (S) vers le corps lenticulaire (20).

9. Dispositif d'éclairage et/ou de signalisation (4) selon la revendication 8, dans lequel lesdits éléments d'extraction (76) comprennent une paroi moletée, et/ou des prismes et/ou des éléments en pointillés.

10. Dispositif d'éclairage et/ou de signalisation (4) selon la revendication 8 ou 9, dans lequel le dispositif (4) comprend un guide de lumière interne (80) disposé dans un espace délimité entre lesdites sections principale et secondaire (28, 36) et orienté vers lesdits éléments d'extraction (76), le guide de lumière interne (80) étant à son tour pourvu d'une source lumineuse interne (84).

11. Dispositif d'éclairage et/ou de signalisation (4) selon l'une quelconque des revendications précédentes, dans lequel ladite source lumineuse (16) est une source lumineuse DEL ou une source laser.

12. Dispositif d'éclairage et/ou de signalisation (4) selon l'une quelconque des revendications précédentes, dans lequel le réflecteur principal (56) et/ou le réflecteur secondaire (60) comprennent un prisme et/ou une paroi inclinée capable de dévier la lumière selon la réflexion interne totale et/ou un miroir ou une surface traitée en blanc.

13. Dispositif d'éclairage et/ou de signalisation (4) selon l'une quelconque des revendications précédentes, dans lequel l'élément de distribution (44) est fixé mécaniquement au guide de lumière (24) au moyen d'un dispositif de fixation (88).

14. Dispositif d'éclairage et/ou de signalisation (4) selon la revendication 13, dans lequel ledit moyen de fixation (88) comprend un accouplement de forme.

15. Dispositif d'éclairage et/ou de signalisation (4) selon l'une quelconque des revendications précédentes, dans lequel lesdites sections principale et secondaire (28, 32) sont sans soudure.
